# EUROPÄISCHE PATENTSCHRIFT

(11) **EP 1 615 532 B1**
(45) Veröffentlichungstag und Bekanntmachung des Hinweises auf die Patenterteilung: **06.12.2006**
(21) Anmeldenummer: 04727261.2
(22) Anmeldetag: 14.04.2004
(51) Int. Cl.: A47J 27/21, A47J 36/10

(54) **WASSERKOCHER MIT DECKELVERRIEGELUNG**
WATER BOILER PROVIDED WITH A LOCKING LID
BOUILLOIRE A VERROUILLAGE DE COUVERCLE

(30) Priorität: 15.04.2003 DE 10317352
(43) Veröffentlichungstag der Anmeldung: 18.01.2006
(73) Patentinhaber: BSH Bosch und Siemens Hausgeräte GmbH, 81739 München (DE)
(72) Erfinder: MAGG, Johannes, 83368 St. Georgen (DE); OBERMAIER, Markus, 83365 Nussdorf (DE); STEFFL, Michael, 83250 Marquartstein (DE)
(86) Internationale Anmeldenummer: PCT/EP2004/003927
(87) Internationale Veröffentlichungsnummer: WO 2004/091353

(56) Entgegenhaltungen:
- DE-A- 19 501 078
- DE-U- 29 521 376
- DE-U- 29 902 995
- FR-A- 2 824 536

## Beschreibung

Die vorliegende Erfindung betrifft einen Wasserkocher mit einem Wasserkessel, einem am Wasserkessel angelenkten Deckel und einer Verriegelungseinrichtung zum Verriegeln des Deckels gemäß dem Oberbegriff des Patentanspruchs 1.

Bekannte Wasserkocher weisen einen Wasserkessel zur Aufnahme des Wassers und einen am Wasserkessel zwischen einer Schließ- und einer Offenstellung schwenkbar angelenkten Deckel auf. Der Wasserkessel ist in der Regel mit einem seitlich angebrachten Griff zur leichteren Handhabung und einem an der dem Griff abgewandten Seite des Wasserkessels angeordneten Ausguss versehen. Durch den Ausguss kann der Wasserkessel auch bei geschlossenem Deckel be- und entfüllt werden. Die Erhitzung des Wassers erfolgt über eine in dem Wasserkessel angeordnete Heizvorrichtung bei geschlossenem Deckel. In dieser Schließstellung ist der Deckel durch eine Verriegelungseinrichtung verriegelt, so dass sich der Deckel beim Ausgießen des erhitzten Wassers und beim unbeabsichtigten Umkippen des Wasserkochers nicht öffnet, um ein schwallartiges Entleeren des Wasserkessels zu verhindern. Dies stellt ein wichtiges Sicherheitsmerkmal dar, um die Gefahr von Verbrühungen größeren Ausmaßes auszuschließen.

Die Verriegelungseinrichtung ist zumeist an eine Bedientaste gekoppelt, mittels derer sich die Verriegelung des Deckels lösen lässt. Die Bedientaste kann an bzw. auf dem Griff oder auf dem Deckel selbst angeordnet sein. Nach Freigeben der Verriegelung kann der Deckel manuell oder über eine Druckfeder in die Offenstellung geschwenkt werden.

Aus der DE 299 02 995 U1 ist ein Wasserkocher mit einer Verriegelungseinrichtung bekannt, welche zwei drehbar bewegliche Schwenkhebel innerhalb des Deckels aufweist, deren Enden zur Verriegelung des Deckels in entsprechende Aufnahmen an der Innenseite des Wasserkessels eingreifen. Die Schwenkhebel sind an einen im Deckel verschiebbar gelagerten Schieber drehbeweglich gekoppelt, welcher unter dem Einfluss einer auf einem Griff angeordneten Bedientaste steht. Durch Drücken der Bedientaste gegen eine Federvorspannung des Schiebers werden die Schwenkhebel aus ihrer Verriegelungsposition bewegt und damit die Verriegelung des Deckels freigegeben. Über eine Druckfeder wird der so entriegelte Deckel schließlich automatisch in die Offenstellung aufgeschwenkt, wodurch ein hoher Bedienkomfort erzielt werden soll.

Bei diesem Wasserkocher besteht jedoch das Problem, dass der entriegelte Deckel lediglich über die Kraft der Druckfeder geöffnet wird. Verkalkungen zwischen der Oberseite des Wasserkessels und der Unterseite des Deckels, welche sich insbesondere dann ausbilden, wenn der Deckel längere Zeit nicht geöffnet wird und das Be- bzw. Entfüllen des Wasserkochers lediglich über den Ausguss erfolgt, können jedoch dazu führen, dass die Kraft der Druckfeder nicht mehr ausreicht, um den Deckel aufzuschwenken. Der Deckel muss folglich manuell geöffnet werden, wodurch der Bedienkomfort beeinträchtigt wird.

Andere bekannte Wasserkocher, deren Verriegelungseinrichtungen hingegen unter dem Einfluss einer auf dem Deckel angeordneten Bedientaste stehen, weisen zusätzlich den Nachteil auf, dass durch Drücken der Bedientaste der Deckel gleichzeitig gegen die den Deckel aufschwenkende Druckfeder gedrückt wird. Beim langsamen Freigeben der Bedientaste tritt hierbei das Problem auf, dass der Deckel wieder verriegelt wird und nicht aufschwenkt.

Die Aufgabe der vorliegenden Erfindung besteht darin, einen Wasserkocher mit einer verbesserten Deckelverriegelung bereitzustellen.

Diese Aufgabe wird durch einen Wasserkocher nach Anspruch 1 gelöst. Vorteilhafte Weiterbildungen sind in den abhängigen Ansprüchen angegeben.

Der erfindungsgemäße Wasserkocher weist einen Wasserkessel, einen am Wasserkessel angelenkten, zwischen einer Schließ- und einer Offenstellung schwenkbaren Deckel, eine Verriegelungseinrichtung zum Verriegeln des Deckels in der Schließstellung am Wasserkessel und eine an die Verriegelungseinrichtung gekoppelte Bedientaste zum Freigeben der Verriegelungseinrichtung auf. Die Verriegelungseinrichtung besteht aus einem am Deckel verschiebbar gelagerten, mittels einer Verriegelungsfeder in Richtung der Bedientaste vorgespannten Verriegelungsschieber, welcher mit einem Verriegelungszapfen in der Schließstellung des Deckels in eine Aufnahme am Wasserkessel sperrend eingreift. Diese Aufnahme ist als Kulissenführung ausgebildet mit einer Ausnehmung, die zwei trichterförmig aufeinander zulaufende Seitenflächen aufweist, an die sich eine Hinterschneidungsöffnung unterhalb der der Bedientaste zugewandten Seitenfläche anschließt. Die Verriegelungseinrichtung wirkt mit der Kulissenführung so zusammen, dass der Verriegelungszapfen in der Schließstellung des Deckels in die Hinterschneidungsöffnung eingreift, dass der Verriegelungszapfen sich bei Betätigung der Bedientaste gegen die Vorspannung der Verriegelungsfeder aus der Hinterschneidungsöffnung vorzugsweise entlang der der Bedientaste abgewandten Seitenfläche nach oben zwangsgeführt bewegt, um den Deckel anzuheben und dass der Verriegelungszapfen sich beim anschließenden Freigeben der Bedientaste unter Einwirkung der Verriegelungsfeder auf der der Bedientaste zugewandten Seitenfläche nach oben zwangsgeführt bewegt, um den Deckel weiter in eine entriegelte Zwischenstellung anzuheben, aus welcher der Deckel in die Offenstellung schwenkbar ist.

Durch diese Ausgestaltung wird eine sichere und zuverlässige Verriegelung des Deckels in der Schließstellung ermöglicht, so dass sich der Deckel beispielsweise beim unbeabsichtigten Umkippen des Wasserkochers nicht öffnet. Weiterhin wird der Deckel aufgrund des Zusammenwirkens der Verriegelungseinrichtung mit der Kulissenführung bereits beim Lösen der Verriegelung durch Betätigen und anschließendes Freigeben der Bedientaste in eine entriegelte Zwischenstellung angehoben. Selbst wenn sich eine Verkalkung zwischen der Oberseite des Wasserkessels und der Unterseite des Deckels ausgebildet hat, durch welche der Deckel an der Oberseite des Wasserkessels festhaften kann, ist immer gewährleistet, dass der Deckel beim Entriegelungsvorgang in die Zwischenstellung angehoben wird. Da der Deckel aus dieser Zwischenstellung problemlos in die Offenstellung schwenkbar ist, wird folglich ein hoher Bedienkomfort erzielt. Ferner gestattet die Ausgestaltung der Kulissenführung ein problemloses Schließen des Deckels. Hierzu wird der Deckel manuell heruntergedrückt, so dass sich der Verriegelungszapfen gegen die Vorspannung der Verriegelungsfeder auf der der Bedientaste zugewandten Seitenfläche zwangsgeführt bewegt und anschließend in der Schließstellung des Deckels in die Hinterschneidungsöffnung sperrend eingreift. Aufgrund der Kulissenführung und der Vorspannung durch die Verriegelungsfeder können hierbei produktionsbedingte Fertigungstoleranzen der einzelnen Bauteile ausgeglichen werden, wodurch ein unproblematisches Verschließen des Deckels ermöglicht wird.

In der für die Praxis bevorzugten Ausführungsform weist der Verriegelungsschieber zwei gegenüberliegend angeordnete Verriegelungszapfen auf, welche in entsprechende gegenüberliegend angeordnete Kulissenführungen des Wasserkessels sperrend eingreifen. Durch diese Ausgestaltung wird eine sichere Verriegelung des Deckels in der Schließstellung am Wasserkessel weiter begünstigt.

Die Kopplung zwischen der Bedientaste und dem Verriegelungsschieber erfolgt vorzugsweise über einen drehbar gelagerten Zwischenhebel, wodurch eine einfache und kostengünstige Bauweise des Deckels ermöglicht wird.

Um die Bedienbarkeit des Wasserkochers zu erleichtern, ist der Zwischenhebel ausgelegt, die Bewegungslänge der Bedientaste in eine größere Bewegungslänge des Verriegelungsschiebers, insbesondere in einem Verhältnis von 1:2, zu übersetzen. Bei einer derartigen Gestaltung werden kurze Bedienwege der Bedientaste erreicht.

Weiterhin können kurze Bedienwege der Bedientaste dadurch erzielt werden, dass die Verriegelungszapfen halbzylindrisch mit einer abgeflachten Seitenfläche ausgebildet sind, wobei sich die abgeflachte Seitenfläche im Wesentlichen parallel zu der der Bedientaste zugewandten Seitenfläche der Kulissenführung bewegt.

Gemäß einer weiteren bevorzugten Ausführungsform ist eine Druckfeder vorgesehen, um den Deckel aus der Zwischenstellung in die Offenstellung zu verschwenken. Diese Ausführungsform vermittelt einen hohen Bedienkomfort und ermöglicht eine leichte Handhabung des Wasserkochers.

Ferner kann es von Vorteil sein, die Bedientaste verschiebbar an dem Deckel anzuordnen, um beispielsweise ein formschönes Aussehen des Wasserkochers zu erreichen. Auch kann es vorkommen, dass eine Anordnung der Bedientaste auf einem am Wasserkessel angebrachten Griff ungünstig bzw. nicht möglich ist. Der oben beschriebene Nachteil einer auf dem Deckel angeordneten Bedientaste wird durch das über das Zusammenspiel zwischen Verriegelungseinrichtung und Kulissenführung bewirkte automatische Öffnen des Deckels bei Betätigen und Freigeben der Bedientaste aufgehoben.

Die Erfindung wird im Folgenden anhand der Figuren näher erläutert. Es zeigen:
- Figur 1: eine erfindungsgemäße Ausführungsform eines Wasserkochers mit einem Wasserkessel und einem Deckel in einer verriegelten Schließstellung in der Seitenansicht,
- Figur 2: die Oberseite des erfindungsgemäßen Wasserkochers mit dem Deckel in der Schließstellung in einer geschnittenen Seitenansicht,
- Figuren 3a und 3b: perspektivische, aufgebrochene Darstellungen der Oberseite des erfindungsgemäßen Wasserkochers,
- Figur 4: eine vergrößerte perspektivische Ansicht eines Seitenendes eines Verriegelungsschiebers mit einem Verriegelungszapfen, der in eine Aufnahme des Wasserkessels eingreift,
- Figuren 5a und 5b: eine schematische Schnittdarstellung des in der Schließstellung verriegelten Deckels und der Oberseite des Wasserkessels, wobei die Schnittlinie durch den Verriegelungszapfen verläuft, und eine vergrößerte Teilansicht des in die Aufnahme eingreifenden Verriegelungszapfens,
- Figuren 6a und 6b: den Figuren 5a und 5b entsprechende Darstellungen beim Freigeben der Verriegelung, und
- Figuren 7a und 7b: weitere den Figuren 5a und 5b entsprechende Darstellungen, wobei sich der Deckel in einer entriegelten Zwischenstellung befindet.

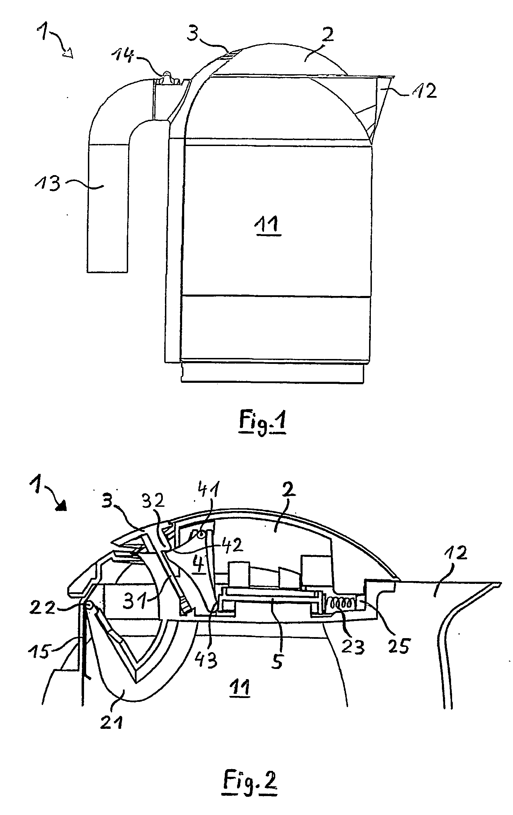

Figur 1 zeigt eine erfindungsgemäße Ausführungsform eines Wasserkochers 1 in einer Seitenansicht. Der Wasserkocher 1 weist einen Wasserkessel 11 zur Aufnahme des zu erhitzenden Wassers und einen am Wasserkessel 11 zwischen einer Schließ- und einer Offenstellung schwenkbar angelenkten Deckel 2 auf. Anhand von Figur 2, welche die Oberseite des Wasserkochers 1 in einer geschnittenen Seitenansicht mit einer durch die Mitte des Wasserkochers 1 verlaufenden Schnittlinie zeigt, wird deutlich, dass der Deckel 2 über einen mit Lagerzapfen 22 versehenen Lagerarm 21 drehbar am Wasserkessel 11 gelagert ist. Mit Hilfe einer als Schenkelfeder ausgebildeten Druckfeder 15, deren Schenkel sich am Lagerarm 21 und an der Innenseite des Wasserkessels 11 abstützen, kann der Deckel 2 aus der Schließ- in die Offenstellung geschwenkt werden.

Wie Figur 1 weiter zeigt, ist der Wasserkessel 11 zur leichteren Handhabung mit einem seitlich angebrachten Griff 13 versehen. Der Griff 13 weist auf der Oberseite einen An/Aus-Schalter 14 auf, mit dem eine in Figur 1 nicht dargestellte Heizvorrichtung innerhalb des Wasserkessels 11 an- bzw. abgeschaltet werden kann. Der An/Aus-Schalter 14 ist ferner mit einem in Figur 1 nicht dargestellten Dampfabschalter verbunden, um einen Heizvorgang ab einer bestimmten innerhalb des Wasserkessels 11 gebildeten Dampfmenge automatisch abzuschalten.

An der dem Griff 13 abgewandten Seite des Wasserkochers 1 ist der Wasserkessel 11 an der Oberseite mit einem Ausguss 12 versehen. Über den Ausguss 12 lässt sich der Wasserkessel 11 auch bei dem in den Figuren 1 und 2 dargestellten Deckel 2 in der Schließstellung be- bzw. entfüllen.

Der Deckel 2 ist in der Schließstellung durch eine Verriegelungseinrichtung 5, 51 am Wasserkessel 11 verriegelt, so dass sich der Deckel 2 beim Ausgießen des erhitzten Wassers oder bei einem unbeabsichtigten Umkippen des Wasserkochers 1 nicht selbständig öffnet. Hierdurch wird ein schwallartiges Entleeren des Wasserkessels 11 und damit die Gefahr von Verbrühungen größeren Ausmaßes verhindert.

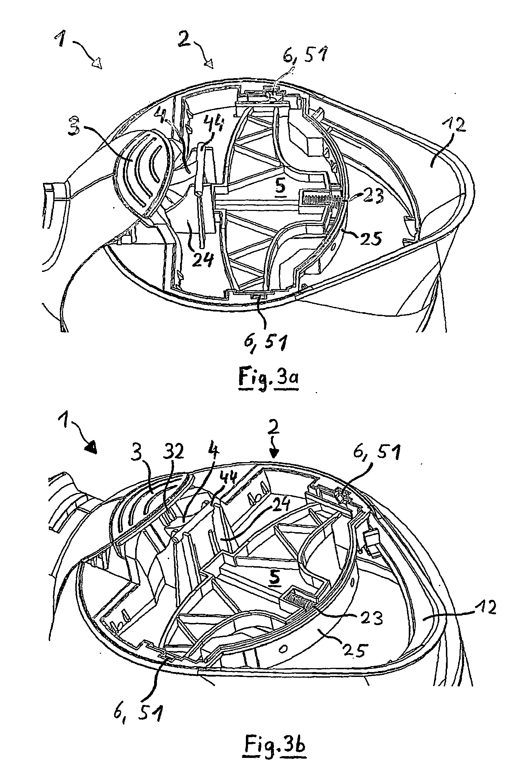

Die Verriegelungseinrichtung 5, 51 kann durch Drücken einer auf dem Deckel 2 angeordneten und an die Verriegelungseinrichtung 5, 51 gekoppelten Bedientaste 3 frei gegeben werden. Anhand von Figur 2 und den Figur 2 entsprechenden Figuren 3a und 3b, welche perspektivische, aufgebrochene Darstellungen der Oberseite des Wasserkochers 1 zeigen, ist die Verriegelungseinrichtung 5, 51 sowie die Kopplung ersichtlich.

Die Verriegelungseinrichtung 5, 51 weist einen innerhalb des Deckels 2 horizontal verschiebbar gelagerten Verriegelungsschieber 5 auf, welcher mittels einer Verriegelungsfeder 23 in Richtung der Bedientaste 3 vorgespannt ist. Der Verriegelungsschieber 5 ist im Wesentlichen T-förmig ausgebildet und weist im vorderen Bereich eine Nut auf, in welcher die Verriegelungsfeder 23 sicher geführt wird. Die Verriegelungsfeder 23 stützt sich mit einem Ende an einer Wandung 25 des Deckels 2 ab.

Die Kopplung zwischen dem Verriegelungsschieber 5 und der Bedientaste 3 erfolgt über einen innerhalb des Deckels 2 drehbar gelagerten Zwischenhebel 4. Hierzu weist der Zwischenhebel 4 an einer Oberkante ein auf beiden Seiten des Zwischenhebels 4 hervorstehendes zylinderförmiges Drehglied 44 auf, welches in entsprechenden Aussparungen eines Drehständers 24 des Deckels 2 drehbar gelagert ist. Die durch diese Anordnung vorgegeben Drehachse 41 des Zwischenhebels 4 verläuft in Längsrichtung des Drehgliedes 44 und ist in Figur 2 senkrecht zur Bildebene orientiert.
Durch Herunterdrücken der Bedientaste 3, welche über ein längliches Führungselement 31 in einer entsprechenden Führung des Deckels 2 verschiebbar gelagert ist, drückt gleichzeitig ein auf dem Führungselement 31 angeordnetes hervorstehendes Andrückelement 32 auf eine anliegende erste Andrückfläche 42 des Zwischenhebels 4. Dabei dreht sich der Zwischenhebel 4 gegen den Uhrzeigersinn um seine Drehachse 41 und drückt mit einer zweiten Andrückfläche 43 auf den angrenzenden Verriegelungsschieber 5, der gegen die Vorspannung der Verriegelungsfeder 23 von der Bedientaste 3 weg bewegt wird. Der in den Figuren 2 bis 3b dargestellte Zwischenhebel 4 ist so ausgelegt, dass die Bewegungslänge der Bedientaste 3 in eine größere Bewegungslänge des Verriegelungsschiebers 5, insbesondere in einem Verhältnis von 1:2, übersetzt wird, um kurze Bedienwege der Bedientaste 3 zu erreichen.

Wird die so gegen die Vorspannung der Verriegelungsfeder 23 durchgedrückte Bedientaste 3 wieder losgelassen, so werden der Verriegelungsschieber 5, der Zwischenhebel 4 und die Bedientaste 3 wieder in ihre in den Figuren 2 bis 3b dargestellten Ausgangspositionen zurück bewegt.

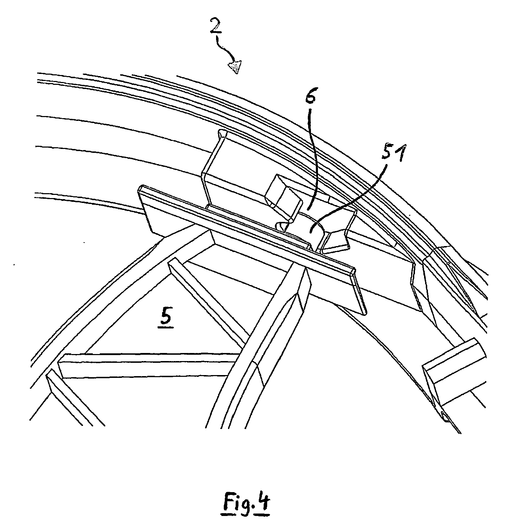

Die Verriegelung des Deckels 2 in der in den Figuren 1 bis 3b dargestellten Schließstellung erfolgt über zwei Verriegelungszapfen 51, die an den seitlichen Enden des Verriegelungsschiebers 5 angeordnet sind. Diese Verriegelungszapfen 51 können in entsprechende gegenüberliegend angeordnete Aufnahmen 6 an der Innenseite des Wasserkessels 11 sperrend eingreifen. Hierzu ist in Figur 4 eine vergrößerte perspektivische Ansicht eines seitlichen Endes des Verriegelungsschiebers 5 mit einem Verriegelungszapfen 51, der in Eingriff mit einer Aufnahme 6 des Wasserkessels 11 steht, dargestellt.

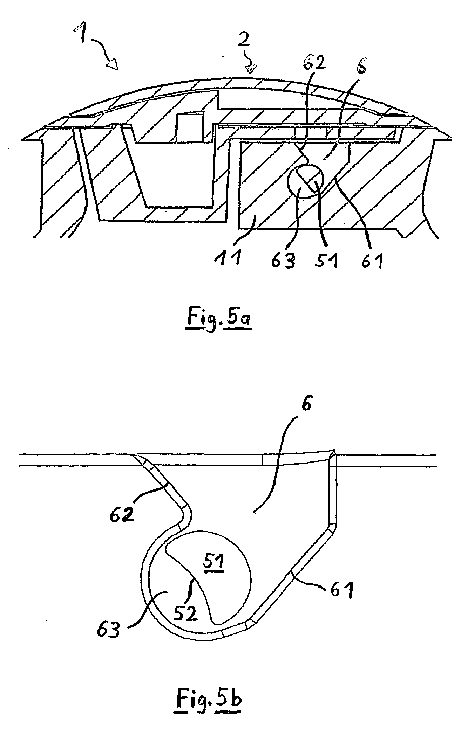

Zur besseren Veranschaulichung zeigt Figur 5a eine entsprechende schematische Schnittdarstellung des in der Schließstellung verriegelten Deckels 2 und der Oberseite des Wasserkessels 11, wobei die Schnittlinie durch einen der Verriegelungszapfen 51 bzw. eine Aufnahme 6 verläuft, und Figur 5b eine vergrößerte Teilansicht. Zur Verdeutlichung wurden der Verriegelungszapfen 51 sowie die Kulissenführung 6 in Figur 5a in vergrößerten Proportionen dargestellt. Der Wasserkocher 1 ist entsprechend den vorangegangenen Figuren so orientiert, dass die hier nicht dargestellte Bedientaste 3 auf der linken Seite zu liegen kommt.

Die Aufnahme ist als Kulissenführung 6 ausgebildet mit einer Ausnehmung, die zwei trichterförmig aufeinander zulaufende Seitenflächen 61; 62 aufweist, an die sich eine als Kreissegment ausgebildeten Hinterschneidungsöffnung 63 unterhalb der der Bedientaste 3 zugewandten Seitenfläche 62 anschließt. Der Verriegelungszapfen 51 ist halbzylindrisch mit einer abgeflachten Seitenfläche 52 ausgebildet.

Die Verriegelungseinrichtung 5, 51 wirkt mit der Kulissenführung 6 so zusammen, dass der Verriegelungszapfen 51 in der Schließstellung des Deckels 2 in die Hinterschneidungsöffnung 63 eingreift. Durch die Verriegelungsfeder 23 ist der Verriegelungsschieber 5 und damit der Verriegelungszapfen 51 in Richtung der Bedientaste 3 vorgespannt, so dass der Verriegelungszapfen 51 nicht aus der Hinterschneidungsöffnung 63 entweichen kann. Somit wird eine sichere und zuverlässige Verriegelung des Deckels 2 in der Schließstellung am Wasserkessel 11 bewirkt.

Durch die oben beschriebene Bewegung des Verriegelungsschiebers 5 beim Drücken sowie Freigeben der Bedientaste 3 wirkt die Verriegelungseinrichtung 5, 51 weiter mit der Kulissenführung 6 so zusammen, dass der Deckel 2 in eine entriegelte Zwischenstellung angehoben wird. Diese Funktionsweise wird anhand der folgenden Figuren erläutert.

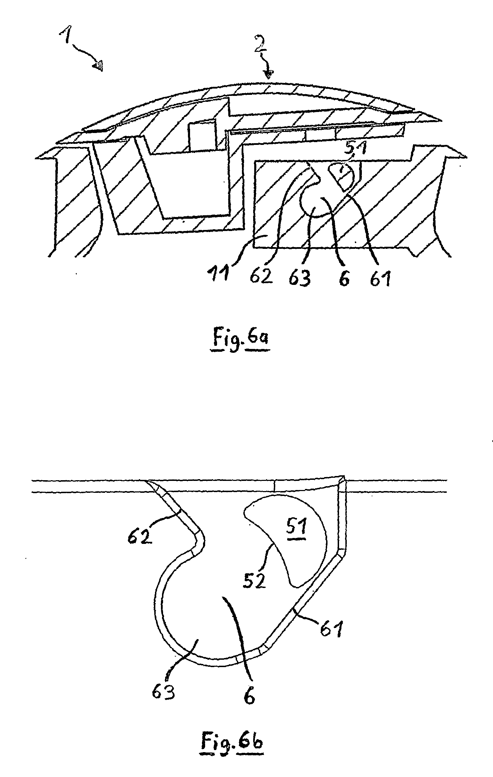

Die Figuren 6a und 6b zeigen den Figuren 5a und 5b entsprechende Darstellungen bei durchgedrückter Bedientaste 3. Das Drücken der Bedientaste 3 hat wie oben beschrieben eine Bewegung des Verriegelungsschiebers 5 gegen die Vorspannung der Verriegelungsfeder 23 von der Bedientaste 3 weg zur Folge. Dadurch bewegt sich der Verriegelungszapfen 51 aus der Hinterschneidungsöffnung 63 entlang der der Bedientaste 3 abgewandten Seitenfläche 61 zwangsgeführt nach oben, wodurch gleichzeitig der Deckel 2 angehoben wird.

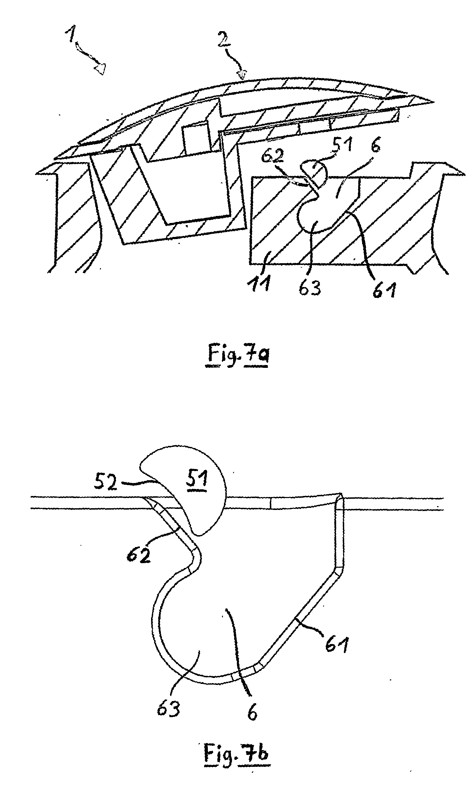

Beim anschließenden Freigeben der Bedientaste 3 und der damit verbundenen Bewegung des Verriegelungsschiebers 5 in Richtung der Bedientaste 3 aufgrund der Einwirkung der Verriegelungsfeder 23 bewegt sich der Verriegelungszapfen 51 zwangsgeführt auf der der Bedientaste 3 zugewandten Seitenfläche 62 nach oben, so dass der Deckel 2 weiter in die entriegelte Zwischenstellung angehoben wird. Dies ist in den den Figuren 5a und 5b bzw. 6a und 6b entsprechenden Figuren 7a und 7b dargestellt. Aus der Zwischenstellung wird der Deckel 2 dann über die in Figur 2 dargestellte Druckfeder 15 in die Offenstellung aufgeschwenkt.

Das durch das Zusammenspiel der Verriegelungseinrichtung 5, 51 mit der Kulissenführung 6 bewirkte Anheben des Deckels 2 beim Freigeben der Verriegelung erfolgt entgegen der auf den Deckel 2 durch das Drücken der Bedientaste 3 einwirkenden Kraft. Selbst bei einem langsamen Freigeben der Bedientaste 3 ist immer gewährleistet, dass der Deckel 2 in die Zwischen- und anschließend über die Druckfeder 15 in die Offenstellung aufschwenkt.

Anhand der Figuren 7a und 7b wird deutlich, dass sich die abgeflachte Seitenfläche 52 des Verriegelungszapfens 51 im Wesentlichen parallel zu der der Bedientaste 3 zugewandten Seitenfläche 62 der Kulissenführung 6 bewegt. Durch diese Ausgestaltung wird der Bedienweg der Bedientaste 3 zusätzlich verkürzt, da der Verriegelungszapfen 51 bei der zwangsgeführten Bewegung auf der der Bedientaste 3 abgewandten Seitenfläche 61 nicht vollständig über die zwischen der Hinterschneidungsöffnung 63 und der der Bedientaste 3 zugewandten Seitenfläche 62 gebildete Kante geführt werden muss. Es ist ausreichend, wenn lediglich ein Teil der abgeflachten Seitenfläche 52 des Verriegelungszapfens 51 oberhalb der Hinterschneidungsöffnung 63 auf der der Bedientaste 3 zugewandten Seitenfläche 62 der Kulissenführung 6 zu liegen kommt, und der Verriegelungszapfen 51 sich hierdurch nach oben zwangsgeführt bewegt. Von Vorteil kann es hierbei zudem sein, wenn wie in den Figuren 5b, 6b und 7b angedeutet, die abgeflachte Seitenfläche 52 etwas nach innen gewölbt ausgebildet ist, um ein Hintergreifen der der Bedientaste zugewandten Seitenfläche 62 durch den Verriegelungszapfen 51 zu erzielen.

Zum Schließen wird der Deckel 2 gegen die Einwirkung der Druckfeder 15 manuell herunter gedrückt. Wird die Zwischenstellung des Deckels 2 passiert, so bewegt sich der Verriegelungszapfen 51 gegen die Vorspannung der Verriegelungsfeder 23 zwangsgeführt auf der der Bedientaste 3 zugewandten Seitenfläche 62 und greift anschließend in der Schließstellung des Deckels 2 in die Hinterschneidungsöffnung 63 sperrend ein. Aufgrund der Form der Kulissenführung 6 und der Vorspannung durch die Verriegelungsfeder 23 werden hierbei produktionsbedingte Fertigungstoleranzen der einzelnen Bauteile ausgeglichen, wodurch ein unproblematisches Verschließen des Deckels 2 ermöglicht wird. Zudem ist gewährleistet, dass der Deckel 2 in der verriegelten Schließstellung die Oberseite des Wasserkessels 11 sauber verschließt und kein Spalt zwischen dem Deckel 2 und der durch den Deckel 2 abgedeckten Oberseite des Wasserkessels 11 auftritt, aus welchem Wasserdampf während des Erhitzungsvorgangs austreten könnte. Dies ist insbesondere wichtig zur Erreichung kurzer Abschaltzeiten des Dampfabschalters, der abhängig von einer bestimmten innerhalb des Wasserkessels 11 gebildeten Dampfmenge die Heizvorrichtung des Wasserkochers 1 automatisch abschaltet.

Anstelle der dargestellten Kulissenführung 6 mit schräg verlaufenden Seitenflächen 61; 62 und einer als Kreissegment ausgebildeten Hinterschneidungsöffnung 63 sind andere Ausführungsformen vorstellbar. Es ist beispielsweise möglich, radial nach oben gekrümmte Seitenflächen und eine ovale oder eckig gestaltete Hinterschneidungsöffnung vorzusehen. Auch in Bezug auf den bzw. die Verriegelungszapfen sind Ausführungsformen mit anderen Geometrien denkbar.

Ferner ist es möglich, die Bedientaste 3 an einer anderen Stelle anzuordnen. Beispielsweise könnte der Griff 13 mit einer an die Verriegelungseinrichtung 5, 51 gekoppelten Bedientaste versehen werden, sofern ausreichende Platzverhältnisse, insbesondere für die mechanische Kopplung, vorhanden sind. Aufgrund des Zusammenwirkens der Verriegelungseinrichtung 5, 51 mit der Kulissenführung 6 wird der Deckel 2 hierbei selbst dann zuverlässig angehoben, wenn sich eine Verkalkung zwischen der Oberseite des Wasserkessels 11 und der Unterseite des Deckels 2 ausgebildet hat, gegen die die Druckfeder 15 den Deckel 2 unter Umständen allein nicht zu öffnen vermag.

Bezugszeichenliste
- 1: Wasserkocher
11 Wasserkessel
12 Ausguss
13 Griff
14 An/Aus-Schalter
15 Druckfeder
- 2: Deckel
21 Lagerarm
22 Lagerzapfen
23 Verriegelungsfeder
24 Drehständer
25 Wandung
- 3: Bedientaste
31 Führungselement
32 Andrückelement
- 4: Zwischenhebel
41 Drehachse
42 Andrückfläche
43 Andrückfläche
44 Drehglied
- 5: Verriegelungsschieber
51 Verriegelungszapfen
52 abgeflachte Seitenfläche
- 6: Aufnahme / Kulissenführung
61 Seitenfläche
62 Seitenfläche
63 Hinterschneidungsöffnung

## Patentansprüche

1. Wasserkocher mit einem Wasserkessel (11), einem am Wasserkessel (11) angelenkten Deckel (2), der zwischen einer Schließ- und einer Offenstellung schwenkbar ist, einer Verriegelungseinrichtung (5, 51) zum Verriegeln des Deckels (2) in der Schließstellung am Wasserkessel (11) und einer an die Verriegelungseinrichtung (5, 51) gekoppelten Bedientaste (3) zum Freigeben der Verriegelungseinrichtung, wobei die Verriegelungseinrichtung (5, 51) einen am Deckel (2) verschiebbar gelagerten, mittels einer Verriegelungsfeder (23) in Richtung der Bedientaste (3) vorgespannten Verriegelungsschieber (5) aufweist und der Verriegelungsschieber (5) mit einem Verriegelungszapfen (51) in der Schließstellung des Deckels (2) in eine Aufnahme (6) am Wasserkessel (11) sperrend eingreift,
**dadurch gekennzeichnet,**
**dass** die Aufnahme als Kulissenführung (6) ausgebildet ist mit einer Ausnehmung, die zwei trichterförmig aufeinander zulaufende Seitenflächen (61; 62) aufweist, an die sich eine Hinterschneidungsöffnung (63) unterhalb der der Bedientaste (3) zugewandten Seitenfläche (62) anschließt, und dass die Verriegelungseinrichtung (5, 51) mit der Kulissenführung (6) so zusammenwirkt, dass der Verriegelungszapfen (51) in der Schließstellung des Deckels (2) in die Hinterschneidungsöffnung (63) eingreift, dass der Verriegelungszapfen (51) sich bei Betätigung der Bedientaste (3) gegen die Vorspannung der Verriegelungsfeder (23) aus der Hinterschneidungsöffnung (63) entlang der der Bedientaste (3) abgewandten Seitenfläche (61) nach oben zwangsgeführt bewegt, um den Deckel (2) anzuheben und dass der Verriegelungszapfen (51) sich beim anschließenden Freigeben der Bedientaste (3) unter Einwirkung der Verriegelungsfeder (23) auf der der Bedientaste (3) zugewandten Seitenfläche (62) oberhalb der Hinterschneidungsöffung (63) bewegt, wodurch der Deckel (2) entriegelt ist.

2. Wasserkocher nach Anspruch 1, **dadurch gekennzeichnet, dass** der Verriegelungsschieber (5) zwei gegenüberliegend angeordnete Verriegelungszapfen (51) aufweist, welche in entsprechende gegenüberliegend angeordnete Kulissenführungen (6) des Wasserkessels (11) sperrend eingreifen.

3. Wasserkocher nach einem der vorhergehenden Ansprüche, **dadurch gekennzeichnet, dass** die Kopplung zwischen der Bedientaste (3) und dem Verriegelungsschieber (5) über einen drehbar gelagerten Zwischenhebel (4) erfolgt.

4. Wasserkocher nach Anspruch 3, **dadurch gekennzeichnet, dass** der Zwischenhebel (4) ausgelegt ist, die Bewegungslänge der Bedientaste (3) in eine größere Bewegungslänge des Verriegelungsschiebers (5), insbesondere in einem Verhältnis von 1:2, zu übersetzen.

5. Wasserkocher nach einem der vorhergehenden Ansprüche, **dadurch gekennzeichnet, dass** der bzw. die Verriegelungszapfen (51) halbzylindrisch mit einer abgeflachten Seitenfläche (52) ausgebildet sind, wobei sich die abgeflachte Seitenfläche (52) im Wesentlichen parallel zu der der Bedientaste (3) zugewandten Seitenfläche (62) der Kulissenführung (6) bewegt.

6. Wasserkocher nach einem der vorhergehenden Ansprüche, **dadurch gekennzeichnet, dass** eine Druckfeder (15) vorgesehen ist, um den Deckel (2) aus der Zwischenstellung in die Offenstellung zu verschwenken.

7. Wasserkocher nach einem der vorhergehenden Ansprüche, **dadurch gekennzeichnet, dass** die Bedientaste (3) verschiebbar an dem Deckel (2) angeordnet ist.

8. Wasserkocher nach einem der vorhergehenden Ansprüche, **dadurch gekennzeichnet, dass** der Verriegelungszapfen (51) sich beim Freigeben der Bedientaste (3) unter Einwirkung der Verriegelungsfeder (23) auf der der Bedientaste (3) zugewandten Seitenfläche (62) nach oben zwangsgeführt bewegt, um den Deckel (2) weiter in eine entriegelte Zwischenstellung anzuheben, aus selcher der Deckel (2) in die Offenstellung schwenkt.

## Claims

1. Kettle with a water vessel (11), a lid (2), which is pivotably mounted at the water vessel (11) and which is pivotable between a closed and an open setting, a locking device (5, 51) for locking the lid (2) in the closed setting at the water vessel (11) and a control button (3), which is coupled with the locking device (5, 51), for release of the locking device, wherein the locking device (5, 51) comprises a locking slide (5), which is displaceably mounted at the lid (2) and which is biased in the direction of the control button (3) by means of a locking spring (23), and the locking slide (5) in the closed setting of the lid (2) engages in blocking manner by a locking pin (51) in a receptacle (6) at the water vessel (11), **characterised in that** the receptacle is constructed as a gate guide (6) with a recess having two side surfaces (61; 62), which run towards one another in funnel-shaped manner and at which an undercut opening (63) adjoins below the side surface (62) facing the control button (3), and that the locking device (5, 51) so co-operates with the gate guide (6) that the locking pin (51) in the closed setting of the cover (2) engages in the undercut opening (63), that the locking pin (51) on actuation of the control button (3) is constrainedly moved upwardly against the bias of the locking spring (23) out of the undercut opening (63) along the side surface (61) remote from the control button (3) in order to raise the lid (2) and that the locking pin (51) on subsequent release of the control button (3) moves under the action of the locking spring (23) on the side surface (62), which is remote from the control button (3), above the undercut opening (63), whereby the lid (2) is unlocked.

2. Kettle according to claim 1, **characterised in that** the locking slide (5) comprises two oppositely arranged locking pins (51) which engage in blocking manner in corresponding oppositely arranged gate guides (6) of the kettle (11).

3. Kettle according to one of the preceding claims, **characterised in that** the coupling between the control button (3) and the locking slide (5) takes place by way of a rotatably mounted intermediate lever (4).

4. Kettle according to claim 3, **characterised in that** the intermediate lever (4) is designed to translate the movement length of the operating button (3) into a larger movement length of the locking slide (5), particularly in a ratio of 1:2.

5. Kettle according to one of the preceding claims, **characterised in that** the locking pin or pins (51) is or are of semi-cylindrical construction with a flattened side surface (52), wherein the flattened side surface (62) moves substantially parallel to the side surface (62), which faces the control button (3), of the gate guide (6).

6. Kettle according to one of the preceding claims, **characterised in that** a compression spring (15) is provided in order to pivot the lid (2) out of the intermediate setting into the open setting.

7. Kettle according to one of the preceding claims, **characterised in that** the control button (3) is arranged at the lid (2) to be displaceable.

8. Kettle according to one of the preceding claims, **characterised in that** the locking pin (51) on release of the control button (3) constrainedly moves upwardly under the effect of the locking spring (23) on the side surface (62), which faces the control button (3), in order to raise the lid (2) back into an unlocked intermediate setting from which the lid (2) is pivoted into the open setting.

## Revendications

1. Bouilloire comprenant un réservoir d'eau (11), un couvercle (2) articulé sur le réservoir d'eau (11), qui peut être basculé entre une position de fermeture et une position ouverte, un dispositif de verrouillage (5, 51) pour le verrouillage du couvercle (2) dans la position de fermeture sur le réservoir d'eau (11) et une touche de commande (3) couplée au dispositif de verrouillage (5, 51) pour la libération du dispositif de verrouillage, le dispositif de verrouillage (5, 51) présentant un coulisseau de verrouillage (5) logé de façon coulissante sur le couvercle (2) et pré-tendu au moyen d'un ressort de verrouillage (23) en direction de la touche de commande (3) et le coulisseau de verrouillage (5) s'engageant en bloquant avec un tenon de verrouillage (51) dans un logement (6) sur le réservoir d'eau (11) lorsque le couvercle (2) est dans la position de fermeture,
**caractérisé en ce que**
le logement est conçu comme un guide de coulisse (6) avec un évidement, qui présente deux faces latérales (61 ; 62) disposées l'une par rapport à l'autre en forme d'entonnoir, auquel se raccorde un orifice de contre-dépouille (63) en dessous de la face latérale (62) tournée vers la touche de commande (3), et **en ce que** le dispositif de verrouillage (5, 51) coopère avec le guide de coulisse (6) de telle sorte que le tenon de verrouillage (51) s'engage dans l'orifice de contre-dépouille (63) lorsque le couvercle (2) est dans la position de fermeture, **en ce que** le tenon de verrouillage (51) se déplace en cas d'actionnement de la touche de commande (3) contre la pré-tension du ressort de verrouillage (23) à partir de l'orifice de contre-dépouille (63) le long de la face latérale (61) opposée à la touche de commande (3) avec un guidage forcé vers le haut, afin de soulever le couvercle (2) et de telle sorte que le tenon de verrouillage (51) se déplace, lors de la libération consécutive de la touche de commande (3), sous l'effet du ressort de verrouillage (23) sur la face latérale (62) tournée vers la touche de commande (3) au-dessus de l'orifice de contre-dépouille (63), de sorte que le couvercle (2) est déverrouillé.

2. Bouilloire selon la revendication 1, **caractérisé en ce que** le coulisseau de verrouillage (5) présente deux tenons de verrouillage (51) disposés l'un en face de l'autre, qui s'engagent avec un effet bloquant dans des guides de coulisse (6) appropriés et disposés en se faisant face, du réservoir d'eau (11).

3. Bouilloire selon l'une quelconque des revendications précédentes, **caractérisé en ce que** le couplage entre la touche (3) et le coulisseau de verrouillage (5) s'effectue au moyen d'un levier intermédiaire (4) logé de façon rotative.

4. Bouilloire selon la revendication 3, **caractérisé en ce que** le levier intermédiaire (4) est conçu pour convertir la longueur de déplacement de la touche de commande (3) en une longueur de déplacement plus grande du coulisseau de verrouillage (5), en particulier dans un rapport 1:2.

5. Bouilloire selon l'une quelconque des revendications précédentes, **caractérisé en ce que** le ou les tenons de verrouillage (51) sont conçus en forme de demi-cylindre avec une face latérale (52) aplatie, la face latérale (52) aplatie se déplaçant sensiblement parallèlement à la face latérale (62), tournée vers la touche de commande (3), du guide de coulisse (6).

6. Bouilloire selon l'une quelconque des revendications précédentes, **caractérisé en ce qu'**un ressort de pression (15) est prévu pour basculer le couvercle (2) à partir de la position intermédiaire dans la position ouverte.

7. Bouilloire selon l'une quelconque des revendications précédentes, **caractérisé en ce que** la touche de commande (3) est disposée de façon coulissante sur le couvercle (2).

8. Bouilloire selon l'une quelconque des revendications précédentes, **caractérisé en ce que** le tenon de verrouillage (51) se déplace, lors de la libération de la touche de commande (3), sous l'effet du ressort de verrouillage (23) sur la face latérale (62) tournée vers la touche de commande (3), avec un guidage forcé vers le haut, afin de soulever le couvercle (2) davantage dans une position intermédiaire déverrouillée, à partir de laquelle le couvercle (2) bascule dans la position ouverte.
